# EUROPÄISCHE PATENTSCHRIFT

(11) **EP 2 047 138 B1**
(45) Veröffentlichungstag und Bekanntmachung des Hinweises auf die Patenterteilung: **13.03.2013**
(21) Anmeldenummer: 07788150.6
(22) Anmeldetag: 01.08.2007
(51) Int. Cl.: F16F 13/08

(54) **DÄMPFENDES AGGREGATLAGER**
ATTENUATING UNIT BEARING
SUPPORT AMORTISSEUR DE GROUPE

(30) Priorität: 03.08.2006 DE 102006036343
(43) Veröffentlichungstag der Anmeldung: 15.04.2009
(73) Patentinhaber: Trelleborg Automotive Germany GmbH, 64747 Breuberg (DE)
(72) Erfinder: HOFMANN, Manfred, 65597 Hünfelden (DE); GRAEVE, Arndt, 56072 Koblenz (DE)
(74) Vertreter: Preissner, Nicolaus
(86) Internationale Anmeldenummer: PCT/EP2007/057985
(87) Internationale Veröffentlichungsnummer: WO 2008/015247

(56) Entgegenhaltungen:
- JP-A- 11 182 624
- JP-A- 2002 286 072
- US-A1- 2002 069 731

## Beschreibung

Die vorliegende Erfindung betrifft ein dämpfendes Aggregatlager zur Verwendung als Motorlager für ein Kraftfahrzeug, mit einer Tragfeder, die eine mit einem Arbeitsmedium gefüllte Arbeitskammer begrenzt.

Über derartige Aggregatlager werden Motor und Getriebe eines Kraftfahrzeugs mit der Karosserie verbunden. Derartige Lager müssen einerseits die auftretenden Gewichtskräfte, Momente und Massenkräfte des Aggregats abstützen und andererseits auftretende Geräusche und Schwingungen isolieren.

Um diesen Aufgaben gerecht zu werden, sind derartige Aggregatlager als hydraulische oder pneumatisch dämpfende Lager ausgebildet. Diese weisen eine Tragfeder auf, die eine mit einem Arbeitsmedium gefüllte Arbeitskammer umgibt. Ein derartiges bekanntes Aggregatlager ist in der DE 102 45 122 A1 beschrieben. Die von der Tragfeder begrenzte Arbeitskammer ist über einen Düsenkanal mit der Umgebung oder einer Ausgleichskammer verbunden. Die Tragfeder besteht aus einem gummielastischen, vulkanisierbaren Material. Der hierfür üblicherweise eingesetzte Naturkautschuk (NR) weist eine relativ geringe Dauertemperaturbeständigkeit von ca. 80 °C auf. Synthetischer Kautschuk (EPDM) weist eine Dauertemperaturbeständigkeit bis ca. 120 °C auf. Eine Beaufschlagung dieser Werkstoffe mit Dauertemperaturen oberhalb von 100°C beziehungsweise 140 °C führt zu einer Zerstörung des Werkstoffs.

Bei den heute in Kraftfahrzeugen zum Einsatz kommenden Hochleistungsmotoren, insbesondere in Verbindung mit aus Geräuschgründen gekapselten Motoren, ist eine höhere Temperaturbeständigkeit erforderlich.

Aus der EP 1 450 068 A2 ist bekannt, bei einem hydraulisch dämpfenden Lager eine Tragfeder aus Silikonkautschuk vorzusehen. Hiermit soll eine Temperaturbeständigkeit bis zu 200 °C erreicht werden können. Um eine ausreichende Beständigkeit gegenüber der Dämpfungsflüssigkeit zu erzielen, ist an der Innenwand der Tragfeder eine Schutzschicht aus EPDM vorgesehen. Derartige Tragfedern aus Silikonkautschuk weisen jedoch nur eine geringe Festigkeit auf. Weiterhin ist die Reißfestigkeit gering, so dass sich Risse schnell ausbreiten.

In der DE 41 06 838 A1 wird ein dämpfendes Aggregatlager beschrieben, das einen ringförmigen Federkörper aus Faserverbundwerkstoff aufweist. Der Federkörper besteht aus mehreren Schichten kunstharzgetränkter Fasern, die hauptsächlich quer zur Beanspruchungsrichtung umlaufend gewickelt sind. Als verstärkende Faser kommen im Wesentlichen Glasfasern, aber auch Kohlefasern in Frage. Als aushärtbare Matrixmaterialien finden im wesentlichen Duroplaste oder auch Thermoplaste, beispielsweise Polyether-Etherketon, Verwendung. Der ringförmige Federkörper umgibt eine hydraulische Dämpfungseinrichtung, die eine von einem Faltenbalg umschlossene Arbeitskammer aufweist. Die Arbeitskammer ist über einen Dämpfungskanal mit einer Ausgleichskammer verbunden. Beide Kammern sind mit einer hydraulischen Flüssigkeit gefüllt. Ein derartiges Aggregatlager weist aufgrund des aus einem elastomeren Material bestehenden Faltenbalges eine begrenzte Temperaturbeständigkeit auf.

Der Erfindung liegt die Aufgabe zugrunde, ein Aggregatlager vorzuschlagen, das eine hohe Temperaturbeständigkeit bei geringem Satz unter Vorlast aufweist.

Zur Lösung dieser Aufgabe wird bei einem Aggregatlager der eingangs genannten Art vorgeschlagen, dass die Tragfeder aus einem Faserverbundwerkstoff besteht, dass das Matrixmaterial des Faserverbundwerkstoffs ein thermoplastischer Kunststoff mit einer Temperaturbeständigkeit von größer gleich 130°C ist, der mittels Tiefziehen verarbeitbar ist, und dass die Tragfeder eine durch Tiefziehen erhaltene Glockenform aufweist, in die eine Wellenstruktur eingeformt ist.

Bei dem erfindungsgemäßen Aggregatlager wird die Arbeitskammer durch die Tragfeder begrenzt, die gleichzeitig die auftretenden statischen Lasten aufnimmt. Da ein thermoplastischer Kunststoff hoher thermischer Stabilität verwendet wird, zeichnet sich das erfindungsgemäße Aggregatlager durch eine hohe Temperaturbeständigkeit aus. Weiterhin tritt nur ein geringer Satz unter Vorlast auf, wodurch der lineare Freiweg über die Lebensdauer nicht wesentlich verringert wird. Weiterhin bewirkt der Matrixwerkstoff, dass nur eine geringe dynamische Verhärtung auftritt. Die durch Tiefziehen hergestellte Tragfeder kann jede geeignete geometrische Form aufweisen. Insbesondere kann die Tragfeder ein rotationssymmetrisch oder rechteckförmig ausgebildet sein. Das erfindungsgemäße Aggregatlager zeichnet sich durch eine hohe Schwingungsfestigkeit und geringes Gewicht aus und ist weiterhin kostengünstig herstellbar.

Vorteilhafte Ausgestaltungen sind Gegenstand der abhängigen Ansprüche.

In vorteilhafter Ausgestaltung wird als Matrixmaterial Polyphenylensulfid (PPS) eingesetzt. Dieses Material zeichnet sich durch eine hohe Wärmeformbeständigkeit, geringe Kriechneigung und hohe Biegefestigkeit aus. Ebenso bietet Polyphenylensulfid eine sehr hohe Hydrolysebeständigkeit.

In vorteilhafter Ausgestaltung wird vorgeschlagen, dass als verstärkende Fasern Glasfasern, Kohlefasern oder Aramidfasern eingesetzt werden.

Vorteilhaft enthält die Tragfeder einen Lagenaufbau von Fasern, der als Gewebe und/oder unidirektionale Faserlage vorliegt.

Vorteilhaft ist der Lagenaufbau als Einzelschicht oder mehrlagige Schicht ausgebildet.

Die Tragfeder ist vorteilhaft an einer Boden-oder Zwischenplatte festgelegt. Die Bodenplatte kann hierbei auch als Strukturteil der Fahrzeugkarosserie vorliegen.

Vorteilhaft ist ein Lagerbolzen an der Tragfeder festgelegt. Hierbei kann der Lagerbolzen vorteilhaft in das Matrixmaterial der Tragfeder eingegossen werden.

Bei einem vorteilhaften Ausführungsbeispiel ist das Aggregatlager als pneumatisch dämpfendes Lager ausgebildet, wobei die Arbeitskammer mit einem Gas, insbesondere Luft, gefüllt ist. Durch die Verwendung von Luft als Dämpfungsmedium wird ebenfalls eine hohe Temperaturbeständigkeit von ≥ 130°C und eine Temperaturunabhängigkeit bis -30 °C erzielt. Weiterhin zeichnet sich ein derartiges Aggregatlager durch geringe Kosten gegenüber hydraulisch dämpfenden Lagern aus.

Vorteilhaft ist die Arbeitskammer über einen Düsenkanal mit der Umgebung oder mit einer Ausgleichskammer verbunden.

Um den Raum für die Arbeitskammer zu reduzieren, ist in vorteilhafter Ausgestaltung vorgesehen, dass eine Innenseite der Tragfeder mit einer das Volumen der Arbeitskammer verkleinernden Schicht versehen ist.

In vorteilhafter Weiterbildung besteht die Schicht aus einem geschlossenzelligen Schaumkunststoff mit hoher Temperaturbeständigkeit.

Bei einer weiteren vorteilhaften Ausgestaltung ist das Aggregatlager als hydraulisch dämpfendes Lager ausgebildet, wobei die Arbeitskammer mit einer hydraulischen Flüssigkeit gefüllt ist.

Hierbei ist die Arbeitskammer über einen Dämpfungskanal mit einer Ausgleichskammer verbunden.

Die Arbeitskammer ist von einer Ausgleichsmembran aus einem elastischen Material begrenzt.

Da die Tragfeder aus Faserverbundwerkstoff eine relativ hohe Volumensteifigkeit aufweist, ist vorteilhaft eine Entkopplungseinrichtung zur Entkopplung kleiner Amplituden vorgesehen.

Die Entkopplungseinrichtung kann in vorteilhafter Ausgestaltung als auf die Innenwand der Tragfeder aufgebrachte komprimierbare Materialschicht ausgebildet sein.

Nachfolgend wird die Erfindung anhand von Ausführungsbeispielen erläutert, die in schematischer Weise in der Zeichnung dargestellt sind. Hierbei zeigen:
- Fig. 1: eine perspektivische Darstellung eines ersten Ausführungsbeispieles eines erfindungsgemäßen Aggregatlagers, das als pneumatisch dämpfendes Lager ausgebildet ist,
- Fig. 2: einen Vertikalschnitt durch Fig. 1,
- Fig. 3: einen Vertikalschnitt durch ein zweites Ausführungsbeispiel eines erfindungsgemäßen Aggregatlagers, und
- Fig. 4: einen Vertikalschnitt durch ein drittes Ausführungsbeispiel eines erfindungsgemäßen Aggregatlagers.

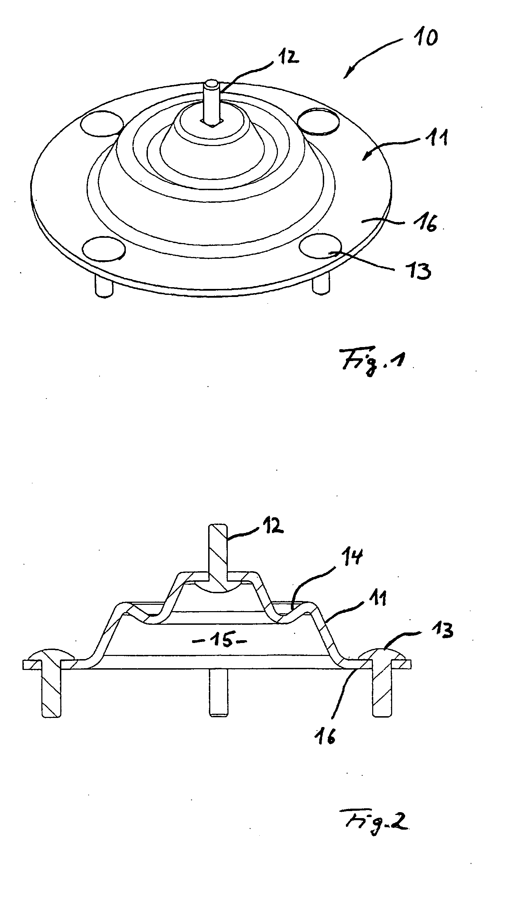

Das in den Fig. 1 und 2 dargestellte Aggregatlager 10 ist als pneumatisch dämpfendes Lager ausgebildet, das als Motorlager Verwendung findet. Das Aggregatlager 10 weist eine Arbeitskammer 15 auf, die von einer Tragfeder 11 begrenzt ist. Die Tragfeder 11 besteht aus einem Faserverbundwerkstoff, wobei das Matrixmaterial des Faserverbundwerkstoffs ein thermoplastischer Kunststoff mit hoher Temperaturbeständigkeit ist. Vorliegend besteht das Materixmaterial aus Polyphenylensulfid (PPS). Dieses Material zeichnet sich durch eine hohe Wärmeformbeständigkeit (je nach Typ zwischen 130°C und 240°C), geringe Kriechneigung und hohe Biegefestigkeit aus. Weiterhin liegt eine sehr gute Hydrolysebeständigkeit vor.

Der Faserverbundwerkstoff weist einen Lagenaufbau von Fasern auf, wobei vorliegend eine Einzelschicht eines Gewebes aus Glasfasern vorgesehen ist. Alternativ kann jedoch auch ein Schichtenverbund mit mehreren gestapelten Einzelschichten vorgesehen sein.

Die rotationssymmetrische Tragfeder 11, die eine Glockenform aufweist, wird durch Tiefziehen erhalten, wobei die Wellenstruktur 14 beim Tiefziehen eingeformt wird. Durch die Wellenstruktur 14 weist die Tragfeder 11 eine hohe Beweglichkeit auf.

Im Zentrum der rotationssymmetrischen Tragfeder 11 ist ein Lagerbolzen 12 festgelegt, der in das Matrixmaterial der Tragfeder 11 eingegossen ist. An dem Lagerbolzen 12 erfolgt die Festlegung des Aggregatlagers 10 an dem nicht dargestellten Motor eines Kraftfahrzeugs.

Am Rand 16 der Tragfeder 11 sind über den Umfang verteilt mehrere Befestigungsbolzen 13 vorgesehen, die der Festlegung des Aggregatlagers 10 an der Fahrzeugkarosserie dienen.

Das Aggregatlager 10 zeichnet sich durch eine hohe Temperaturbeständigkeit aus, die einerseits durch die Temperaturbeständigkeit der Tragfeder und andererseits durch das verwendete Dämpfungsmedium (Luft) erzielt wird.

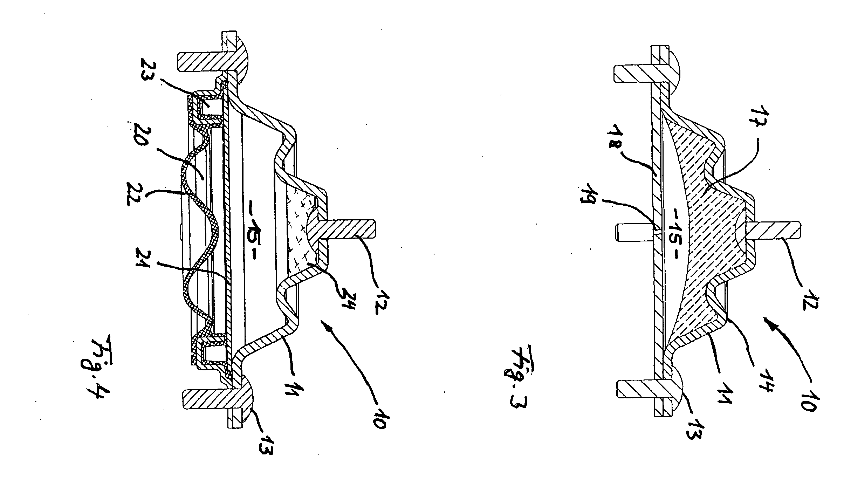

Das in Fig. 3 dargestellte weitere Ausführungsbeispiel eines erfindungsgemäßen Aggregatlagers 10, zu dessen Beschreibung die bereits eingeführten Bezugszeichen für gleiche oder funktionsgleiche Teile verwendet wird, weist eine an der Innenseite der Tragfeder 11 vorgesehene Beschichtung 17 auf, die aus einem geschlossenzelligen Schaumkunststoff mit hoher Temperaturbeständigkeit besteht. Hierzu kann beispielsweise EPDM Verwendung finden. Durch die Beschichtung 17 wird eine signifikante Verringerung des Volumens der Arbeitskammer 15 erreicht.

Die Tragfeder 11 stützt sich an einer Bodenplatte 18 ab, in deren Zentrum ein Düsenkanal 19 eingebracht ist.

Das in Fig. 4 dargestellte weitere Ausführungsbeispiel eines erfindungsgemäßen Aggregatlagers 10 ist als hydraulisch dämpfendes Lager ausgebildet. Die Tragfeder 11 umgibt hierbei eine Arbeitskammer 15, die mit einer hydraulischen Flüssigkeit gefüllt ist. Die Arbeitskammer 15 ist mittels einer Zwischenplatte 21 von einer Ausgleichskammer 20 getrennt. Die Ausgleichskammer 20 wird von einer elastischen Ausgleichsmembran 22 begrenzt. Über einen Dämpfungskanal 23 steht die Arbeitskammer 15 mit der Ausgleichskammer 20 in hydraulischer Verbindung. An der Innenseite der Tragfeder 11 ist eine Entkopplungseinrichtung 24 zur Entkopplung kleiner Amplituden vorgesehen. Diese ist als komprimierbare Materialschicht, beispielsweise aus einem geschlossenzelligen Schaumstoff, ausgebildet.

Bei allen vorstehend beschriebenen Ausführungsbeispielen kommt eine Tragfeder 11 zum Einsatz, die aus einem Faserverbundwerkstoff besteht, wobei das Matrixmaterial des Faserverbundwerkstoffs ein thermoplastischer Kunststoff mit hoher thermischer Stabilität ist, der mittels Tiefziehen verarbeitbar ist. Hierdurch wird eine hohe Temperaturbeständigkeit des Aggregatlagers von ≥ 130°C erzielt. Darüber hinaus bewirkt die zum Einsatz kommende Tragfeder 11 einen sehr geringen Satz in Vorlast, wobei der geringe lineare Freiweg auch über die Lebensdauer des Aggregatlagers 10 nicht wesentlich verringert wird. Weiterhin zeichnet sich das Aggregatlager 10 durch eine geringe dynamische Verhärtung aus.

### Bezugszeichenliste

- 10: Aggregatlager
- 11: Tragfeder
- 12: Lagerbolzen
- 13: Befestigungsbolzen
- 14: Wellenstruktur
- 15: Arbeitskammer
- 16: Rand
- 17: Beschichtung
- 18: Bodenplatte
- 19: Düsenkanal
- 20: Ausgleichskammer
- 21: Zwischenplatte
- 22: Ausgleichsmembran
- 23: Dämpfungskanal
- 24: Entkopplungseinrichtung

## Patentansprüche

1. Dämpfendes Aggregatlager (10) zur Verwendung als Motorlager für ein Kraftfahrzeug, mit einer Tragfeder (11), die eine mit einem Arbeitsmedium gefüllte Arbeitskammer (15) begrenzt, **dadurch gekennzeichnet, dass** die Tragfeder (11) aus einem Faserverbundwerkstoff besteht, dass das Matrixmaterial des Faserverbundwerkstoffs ein thermoplastischer Kunststoff mit einer Temperaturbeständigkeit von größer gleich 130°C ist, der mittels Tiefziehen verarbeitbar ist, und dass die Tragfeder (11) eine durch Tiefziehen erhaltene Glockenform aufweist, in die eine Wellenstruktur (14) eingeformt ist.

2. Aggregatlager (10) nach Anspruch 1, **dadurch gekennzeichnet, dass** als Matrixmaterial Polyphenylensulfid (PPS) eingesetzt wird.

3. Aggregatlager (10) nach Anspruch 1 oder 2, **dadurch gekennzeichnet, dass** als verstärkende Fasern Glasfasern, Kohlefasern oder Aramidfasern eingesetzt werden.

4. Aggregatlager (10) nach Anspruch 1 bis 3, **dadurch gekennzeichnet, dass** die Tragfeder (11) einen Lagenaufbau von Fasern enthält, der als Gewebe und/oder unidirektionale Faserlage vorliegt.

5. Aggregatlager (10) nach einem der Ansprüche 1 bis 4, **dadurch gekennzeichnet, dass** der Lagenaufbau als Einzelschicht oder mehrlagige Schicht ausgebildet ist.

6. Aggregatlager (10) nach einem der Ansprüche 1 bis 5, **dadurch gekennzeichnet, dass** die Tragfeder (11) an einer Boden- oder Zwischenplatte (18,21) festgelegt ist.

7. Aggregatlager (10) nach einem der Ansprüche 1 bis 5, **dadurch gekennzeichnet, dass** ein Lagerbolzen (12) in das Matrixmaterial der Tragfeder (11) eingegossen ist.

8. Aggregatlager (10) nach einem der Ansprüche 1 bis 6, **dadurch gekennzeichnet, dass** das Aggregatlager (10) als pneumatisch dämpfendes Lager ausgebildet ist, wobei die Arbeitskammer (15) mit einem Gas, insbesondere Luft, gefüllt ist.

9. Aggregatlager (10) nach Anspruch 7, **dadurch gekennzeichnet, dass** die Arbeitskammer (15) über einen Düsenkanal (19) mit der Umgebung oder mit einer Ausgleichskammer (22) verbunden ist.

10. Aggregatlager (10) nach Anspruch 7 oder 8, **dadurch gekennzeichnet, dass** eine Innenseite der Tragfeder (11) mit einer das Volumen der Arbeitskammer (15) verkleinernden Beschichtung (17) versehen ist.

11. Aggregatlager (10) nach Anspruch 10, **dadurch gekennzeichnet, dass** die Beschichtung aus einem geschlossenzelligen Schaumstoff mit hoher Temperaturbeständigkeit besteht.

12. Aggregatlager (10) nach einem der Ansprüche 1 bis 7, **dadurch gekennzeichnet, dass** das Aggregatlager (10) als hydraulisch dämpfendes Lager ausgebildet ist, wobei die Arbeitskammer (15) mit einer hydraulischen Flüssigkeit gefüllt ist.

13. Aggregatlager (10) nach Anspruch 11, **dadurch gekennzeichnet, dass** die Arbeitskammer (15) über einen Dämpfungskanal (23) mit einer Ausgleichskammer (20) verbunden ist.

14. Aggregatlager (10) nach Anspruch 11 oder 12, **dadurch gekennzeichnet, dass** die Ausgleichskammer (20) von einer Ausgleichsmembran (22) aus einem elastischen Material begrenzt ist.

15. Aggregatlager (10) nach einem der Ansprüche 1 bis 14, **dadurch gekennzeichnet, dass** eine Entkopplungseinrichtung (24) zur Entkopplung kleiner Amplituden vorgesehen ist.

16. Aggregatlager (10) nach Anspruch 15, **dadurch gekennzeichnet, dass** die Entkopplungseinrichtung (24) als auf die Innenwand der Tragfeder (11) aufgebrachte komprimierbare Materialschicht aus einem geschlossenzelligen Schaumstoff ausgebildet ist.

## Claims

1. Damping power-plant bearing (10) for use as engine bearing for a motor vehicle, having a bearing spring (11) which delimits a working chamber (15) which is filled with a working medium, **characterized in that** the bearing spring (11) is composed of a fibre composite material, **in that** the matrix material of the fibre composite material is a thermoplastic with a temperature resistance of greater than or equal to 130°C, which thermoplastic can be processed by means of deep-drawing, and **in that** the bearing spring (11) has a bell shape which is obtained by deep-drawing and into which an undulating structure (14) is formed.

2. Power-plant bearing (10) according to Claim 1, **characterized in that** polyphenylene sulphide (PPS) is used as matrix material.

3. Power-plant bearing (10) according to Claim 1 or 2, **characterized in that** glass fibres, carbon fibres or aramid fibres are used as reinforcing fibres.

4. Power-plant bearing (10) according to Claims 1 to 3, **characterized in that** the bearing spring (11) comprises a layer structure of fibres which is present as a woven fabric and/or unidirectional fibre layer.

5. Power-plant bearing (10) according to one of Claims 1 to 4, **characterized in that** the layer structure is configured as a single layer or a multi-ply layer.

6. Power-plant bearing (10) according to one of Claims 1 to 5, **characterized in that** the bearing spring (11) is fixed on a base plate or intermediate plate (18, 21).

7. Power-plant bearing (10) according to one of Claims 1 to 5, **characterized in that** a bearing pin (12) is cast integrally into the matrix material of the bearing spring (11).

8. Power-plant bearing (10) according to one of Claims 1 to 6, **characterized in that** the power-plant bearing (10) is configured as a pneumatically damping bearing, the working chamber (15) being filled with a gas, in particular air.

9. Power-plant bearing (10) according to Claim 7, **characterized in that** the working chamber (15) is connected via a nozzle channel (19) to the surroundings or to a balancing chamber (22).

10. Power-plant bearing (10) according to Claim 7 or 8, **characterized in that** an inner side of the bearing spring (11) is provided with a coating (17) which reduces the volume of the working chamber (15).

11. Power-plant bearing (10) according to Claim 10, **characterized in that** the coating is composed of a closed-pore foam with high temperature resistance.

12. Power-plant bearing (10) according to one of Claims 1 to 7, **characterized in that** the power-plant bearing (10) is configured as a hydraulically damping bearing, the working chamber (15) being filled with a hydraulic fluid.

13. Power-plant bearing (10) according to Claim 11, **characterized in that** the working chamber (15) is connected via a damping channel (23) to a balancing chamber (20).

14. Power-plant bearing (10) according to Claim 11 or 12, **characterized in that** the balancing chamber (20) is delimited by a balancing diaphragm (22) made from an elastic material.

15. Power-plant bearing (10) according to one of Claims 1 to 14, **characterized in that** a decoupling device (24) is provided for decoupling small amplitudes.

16. Power-plant bearing (10) according to Claim 15, **characterized in that** the decoupling device (24) is configured as a compressible material layer which is applied to the inner wall of the bearing spring (11) and is made from a closed-pore foam.

## Revendications

1. Coussinet support amortisseur de groupe (10) destiné à être utilisé comme coussinet de moteur pour un véhicule automobile, comprenant un ressort porteur (11) qui délimite une chambre de travail (15) remplie d'un fluide de travail, **caractérisé en ce que** le ressort porteur (11) est en un matériau composite à fibres, **en ce que** la matière de matrice du matériau composite à fibres est une matière thermoplastique avec une résistance à la température supérieure ou égale à 130° C, qui peut être transformée par emboutissage, et **en ce que** le ressort porteur (11) présente une forme en cloche obtenue par emboutissage, dans laquelle est conformée une structure ondulée (14).

2. Coussinet de groupe (10) selon la revendication 1, **caractérisé en ce que** l'on utilise du sulfure de polyphénylène (PPS) comme matière de matrice.

3. Coussinet de groupe (10) selon la revendication 1 ou 2, **caractérisé en ce que** l'on utilise des fibres de verre, des fibres de carbone ou des fibres aramides à titre de fibres de renforcement.

4. Coussinet de groupe (10) selon les revendications 1 à 3, **caractérisé en ce que** le ressort porteur (11) contient une structure en couche, qui se présente sous forme de textile et/ou sous forme de couche en fibres unidirectionnelle.

5. Coussinet de groupe (10) selon l'une des revendications 1 à 4, **caractérisé en ce que** la structure en couche est réalisée sous forme de couche unique ou sous forme multicouches.

6. Coussinet de groupe (10) selon l'une des revendications 1 à 5, **caractérisé en ce que** le ressort porteur (11) est fixé sur une plaque de plancher ou une plaque intermédiaire (18, 21).

7. Coussinet de groupe (10) selon l'une des revendications 1 à 5, **caractérisé en ce qu**'un goujon de montage (12) est intégré par coulée dans la matière de matrice du ressort porteur (11).

8. Coussinet de groupe (10) selon l'une des revendications 1 à 6, **caractérisé en ce que** le coussinet de groupe (10) est réalisé sous forme de coussinet amortisseur pneumatique, dans lequel la chambre de travail (15) est remplie avec un gaz, en particulier de l'air.

9. Coussinet de groupe (10) selon la revendication 7, **caractérisé en ce que** la chambre de travail (15) est reliée à l'environnement ou à une chambre de compensation (22) via un canal à buse (19).

10. Coussinet de groupe (10) selon la revendication 7 ou 8, **caractérisé en ce qu**'une face intérieure du ressort porteur (11) est pourvue d'un revêtement (17) qui réduit le volume de la chambre de travail (15).

11. Coussinet de groupe (10) selon la revendication 10, **caractérisé en ce que** le revêtement est une mousse à pores fermés avec une haute résistance à la température.

12. Coussinet de groupe (10) selon l'une des revendications 1 à 7, **caractérisé en ce que** le coussinet de groupe (10) est réalisé sous forme de coussinet amortisseur pneumatique, dans lequel la chambre de travail (15) est remplie avec un liquide hydraulique.

13. Coussinet de groupe (10) selon la revendication 11, **caractérisé en ce que** la chambre de travail (15) est reliée à une chambre de compensation (20) via un canal d'amortissement (23).

14. Coussinet de groupe (10) selon la revendication 11 ou 12, **caractérisé en ce que** la chambre de compensation (20) est délimitée par une membrane de compensation (22) en une matière élastique.

15. Coussinet de groupe (10) selon l'une des revendications 1 à 14, **caractérisé en ce qu**'il est prévu un dispositif de découplage (24) pour le découplage de faibles amplitudes.

16. Coussinet de groupe (10) selon la revendication 15, **caractérisé en ce que** le dispositif de découplage (24) est réalisé sous la forme d'une couche de matière susceptible d'être comprimée, en une mousse à pores fermés, appliquée sur la paroi intérieure du ressort porteur (11).
